# EUROPÄISCHE PATENTSCHRIFT

(11) **EP 2 364 906 B1**
(45) Veröffentlichungstag und Bekanntmachung des Hinweises auf die Patenterteilung: **28.11.2018**
(21) Anmeldenummer: 11001361.2
(22) Anmeldetag: 18.02.2011
(51) Int. Cl.: B62M 9/126

(54) **Axiale Sicherung mit integriertem Verschlussstopfen**
Axial fixing with integrated stoppers
Sécurisation axiale dotée d'un bouchon de fermeture intégré

(30) Priorität: 12.03.2010 DE 102010011392
(43) Veröffentlichungstag der Anmeldung: 14.09.2011
(73) Patentinhaber: SRAM Deutschland GmbH, 97424 Schweinfurt (DE)
(72) Erfinder: Böhm, Robert, 97453 Mainberg (DE)

(56) Entgegenhaltungen:
- EP-A1- 1 935 774
- GB-A- 2 252 361
- US-A- 4 670 000
- US-A1- 2002 065 158

## Beschreibung

Gegenstand der vorliegenden Erfindung ist eine Einrichtung zur drehbaren, aber axial festlegenden Verbindung zwischen der Drehachse der Kettenführung eines hinteren Schaltwerkes für Fahrräder und dem zugehörigen unteren Gelenkkopf.

Hintere Schaltwerke an Fahrrädern dienen dazu, die Kette zwischen mehreren am Hinterrad montierten Ritzeln umzulegen. Dazu weisen sie ein feststehendes Teil, ein bewegliches Teil sowie einen Parallelogramm-Mechanismus auf. Das feststehende Teil ist am Fahrradrahmen, in der Regel einem hinteren Ausfallende angeordnet, und besteht neben einem Element zur Befestigung am Ausfallende, wie einer Schraube, aus einem oberen Gelenkkopf. Der wesentliche Bestandteil des beweglichen Teils ist ein unterer Gelenkkopf, mit dem sich gemeinsam eine Kettenführung bewegt. Neben der Funktion der Führung der Kette muss mit der Kettenführung das Spannen der Kette realisiert werden. Dazu ist die Kettenführung gegenüber dem unteren Gelenkkopf drehbar an diesem gelagert. Die entsprechende Achse ist meist fest mit der Kettenführung verbunden und in einer Bohrung am Gelenkkopf aufgenommen. Gängige Ausführungen weisen eine Verschraubung zwischen Achse und Kettenführung auf, wie z. B. in der DE 32 35 138. In der DE 36 23 887 ist gezeigt, wie eine Federscheibe in eine umlaufende Nut an der Achse angreift und diese in ihrer axialen Position drehbar gegenüber dem Gelenkkopf festlegt. Bei dieser Lösung ist der Durchgang am unteren Gelenkkopf, der für die Montage der Federscheibe vorgesehen ist, nach der Montage noch vorhanden, wodurch das Eindringen von Schmutz und Feuchtigkeit in den Innenraum noch möglich ist. Dadurch ergeben sich Möglichkeiten für Funktionsstörungen. Ist die Federscheibe auch von der zur Montagerichtung entgegengesetzten Richtung zugänglich, kann sie durch das Ausüben einer Druckkraft auch wieder demontiert werden. An Stelle der Federscheibe kann auch ein Stift zum Einsatz kommen, der in einer Bohrung im unteren Gelenkkopf quer zur Achse eingepresst wird. Dieser Stift greift ebenfalls in eine umlaufende Nut am Gelenkkopf ein, hat aber gegenüber der Lösung mit einer Federscheibe den Nachteil, dass ein Eingriff in die Nut in der Achse nur an kleineren Kontaktflächen zustande kommt, was die Anordnung verschleißempfindlicher macht. Außerdem ist der Stift nicht oder nur mit Schwierigkeiten wieder demontierbar.

Das Dokument US 2002/065158 A offenbart alle Merkmale des Oberbegriffs von Anspruch 1. Es ist eine Axialsicherungs-Anordnung gezeigt, die in einer Öffnung des unteren Gelenkkopfes eines Fahrrad-Schaltwerkes angeordnet ist, wobei auch eine Dichtwirkung erzielt wird. Die Montage und die Demontage eines dabei verwendeten ringförmigen Federelementes erfolgt in Verbindung mit dem Einfügen beziehungsweise dem Entfernen der Achse des Parallelogramm-Mechanismus des Schaltwerkes am unteren Gelenkkopf.

Die Zielsetzung der vorliegenden Erfindung liegt darin, mit einfachen Mitteln eine Verbesserung gegenüber den geschilderten Nachteilen zu erhalten. Diese Zielsetzung wird dadurch erreicht, dass eine Federscheibe und ein Verschlussglied als integrale Einheit ausgebildet werden. Weiterhin sind mit dem Bereitstellen eines Handhabungsvorsprungs günstige Voraussetzungen für eine einfache Montage und Demontage geschaffen.

### Figurenbeschreibung

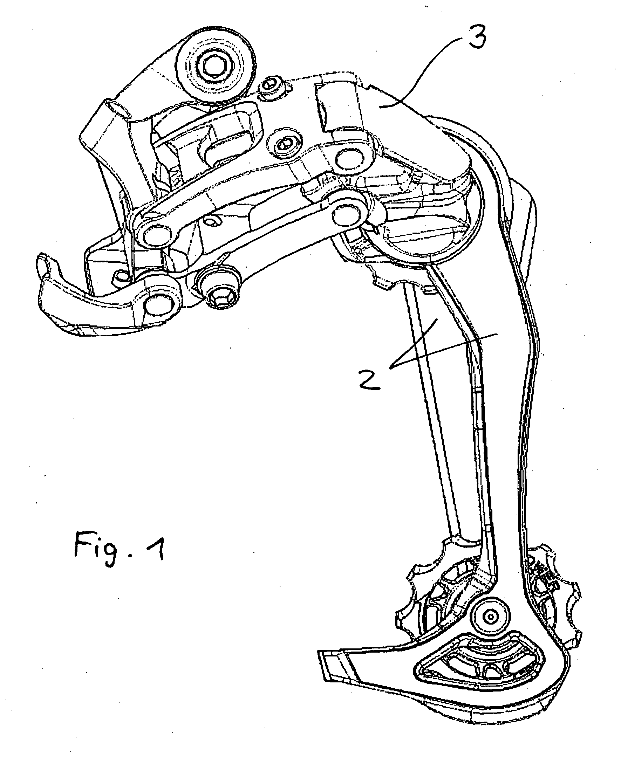

- Fig. 1: zeigt ein typisches hinteres Schaltwerk für ein Fahrrad, an dem die erfindungsgemäße Axialsicherungs-Verschlussglied-Anordnung zur Anwendung kommt.
- Fig. 2: zeigt eine erfindungsgemäße Axialsicherungs-Verschlussglied-Anordnung in einem quer zur Achse im unteren Gelenkkopf verlaufenden Schnittverlauf.
- Fig. 3: zeigt eine erfindungsgemäße Axialsicherungs-Verschlussglied-Anordnung in einem längs zur Achse im unteren Gelenkkopf verlaufenden Schnittverlauf.
- Fig. 4: zeigt eine erste alternative Ausführungsform der erfindungsgemäßen Axialsicherungs-Verschlussglied-Anordnung in einem quer zur Achse im unteren Gelenkkopf verlaufenden Schnittverlauf.
- Fig. 5: zeigt eine erfindungsgemäße Axialsicherungs-Verschlussglied-Anordnung nach Fig. 4 in einem längs zur Achse im unteren Gelenkkopf verlaufenden Schnittverlauf.
- Fig. 6: zeigt eine zweite alternative Ausführungsform der erfindungsgemäßen Axialsicherungs-Verschlussglied-Anordnung in einem quer zur Achse im unteren Gelenkkopf verlaufenden Schnittverlauf.
- Fig. 7: zeigt eine erfindungsgemäße Axialsicherungs-Verschlussglied-Anordnung nach Fig. 6 in einem längs zur Achse im unteren Gelenkkopf verlaufenden Schnittverlauf.

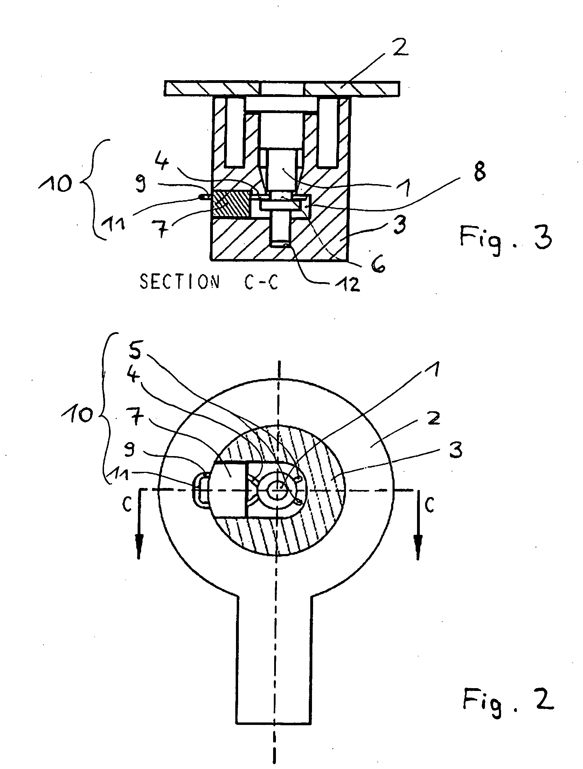

In Fig. 2 ist der untere Gelenkkopf 3 eines hinteren Fahrradschaltwerkes quer zur Achse 1 geschnitten dargestellt, wodurch eine quer zur Achse verlaufende Öffnung 8 sichtbar wird. In dieser Öffnung 8 ist das durch das Federelement 4 und das Verschlussglied 7 gebildete Einfügeelement 10 erkennbar, das in Richtung quer zur Achse 1 in die Öffnung 8 eingefügt ist und auch aus der Öffnung 8 wieder entnommen werden kann. Im eingefügten Zustand umgreifen Rastbereiche 13 an den Federarmen 5 des Federelementes 4 die Achse 1 in einer Nut 6. Es ist das Aufbringen einer Betätigungskraft notwendig, um aus diesem eingerasteten Zustand in einen ausgerasteten Zustand zu gelangen. Zum Einleiten der Betätigungskraft, die in diesem Fall eine Zugkraft ist, weist das Einfügeelement 10 einen Handhabevorsprung 9 auf.

Wie in Fig. 3 dargestellt, ist die Breite der Nut größer als der Durchmesser der Federarme 5, wodurch die Achse 1 am Federarm 5 nur in einer axialen Richtung mit der Wirkung eines Anschlages festgelegt ist. Die Relativbewegung der Achse 1 relativ zum unteren Gelenkkopf 3 wird dadurch begrenzt, dass die Achse am Grund der Bohrung 12 im unteren Gelenkkopf 3 anstößt.

Da die Nut 6 an der Achse 1 kreisrund ist, kann sich die Achse 1 gegenüber dem Einfügeelement 10 drehen, so dass außer Reibungskräften keine weiteren Widerstandskräfte vorhanden sind. Das Verschlussglied 7 schließt die Öffnung 8 nach außen hin ab und verhindert das Eindringen von Feuchtigkeit und Schmutz und schützt dadurch die im Innern des unteren Gelenkkopfes 3 aufgenommenen Bauteile. Insbesondere ist die Achse 1 vor Korrosion geschützt.

Damit bei den Montage- und Demontagevorgängen das Aufschnappen der Rastbereiche 13 der Federarme 5 immer wieder gleichzeitig mit dem Verschließen der Öffnung 8 durch das Verschlussglied 7 erfolgt, muss das Verschlussglied unverschiebbar auf den Federarmen 5 angeordnet sein. Das wird dadurch erreicht, dass die Federarme 5 einen nicht parallelen Verlauf haben, oder dass der Draht in seinem Längsverlauf Querschnittsübergänge aufweist.

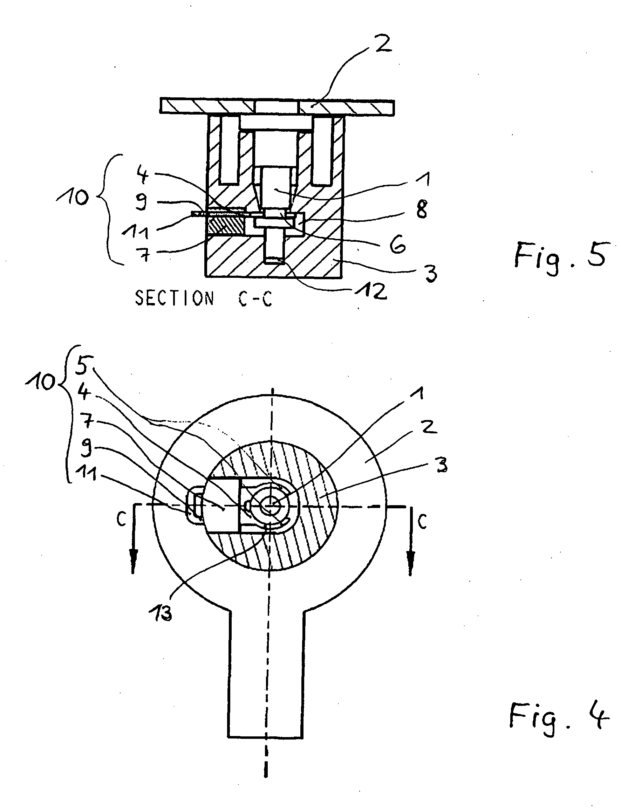

Die Figuren 4 und 5 zeigen ein Einfügeelement 10, bei dem die Federarme 5 und der Handhabevorsprung 9 aus einem metallischen Blech hergestellt sind. Bei dieser Ausführungsform wird das Verschieben des Verschlussgliedes auf den Federarmen 5 durch deren Formgebung gelöst, die ein komplettes Umgreifen von Federarmabschnitten durch den Abschnitt des Verschlussgliedes 7 ermöglichen.

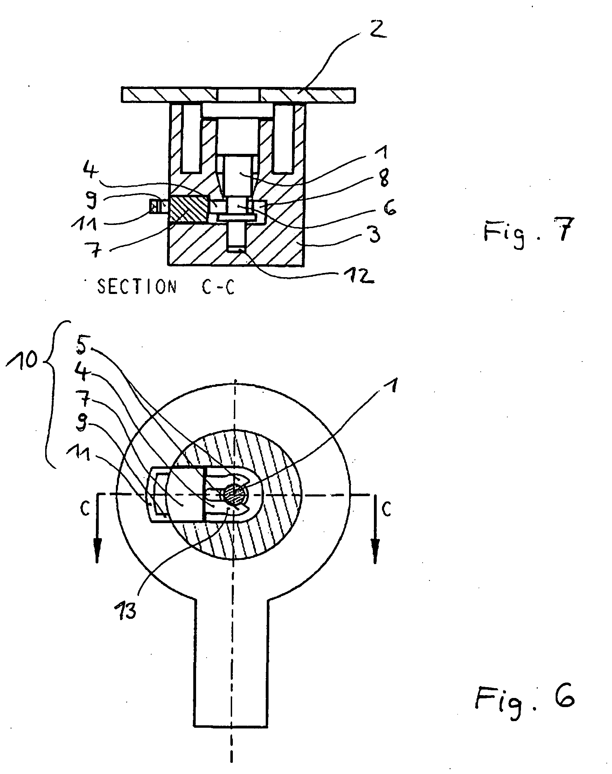

Die Figuren 6 und 7 zeigen ein komplett aus Kunststoff gefertigtes Einfügeelement 10. Bei dieser Ausführungsform bestehen keine Probleme, metallische Bestandteile des Federelements 4 und das aus Kunststoff hergestellte Verschlussglied 7 unverschieblich miteinander zu verbinden. Höhere Anforderungen bestehen an das verwendete Kunststoff-Material, da dieses sowohl ausreichend flexibel sein muss, um die Öffnung 8 abzudichten und andererseits ausreichend steif, damit die Federarme 5 eine genügend große Federkraft aufbringen und die Flächenpressung am Rastbereich 13 mit der Nut 6 ertragbar ist. Eine weitere Anforderung ergäbe sich durch einen vorhandenen Handhabungsvorsprung. Deshalb wurde auf diesen in der Ausführungsform aus Kunststoff bewusst verzichtet.

### Bezugszeichen

- 1: Achse
- 2: Kettenführung
- 3: unterer Gelenkkopf
- 4: Federelement
- 5: Federarm
- 6: Nut
- 7: Verschlussglied
- 8: Öffnung
- 9: Handhabevorsprung
- 10: Einfügeelement
- 11: Mittelabschnitt
- 12: Bohrung
- 13: Rastbereich

## Patentansprüche

1. Axialsicherungs-Verschlussglied-Anordnung an einer Achse (1) der Kettenführung (2) im unteren Gelenkkopf(3)eines hinteren Fahrrad-Schaltwerks,
wobei die Achse (1) gegenüber dem unteren Gelenkkopf (3) drehbar und axial unverschiebbar aufgenommen ist,
wobei ein Federelement (4) in einer quer zur Achse 1 verlaufenden Öffnung 8 im unteren Gelenkkopf (3) aufgenommen ist und zwei Federarme (5) aufweist, die in eine umlaufende Nut(6) an der Achse (1)der Kettenführung (2) eingreifen, um die Achse (1) gegenüber dem unteren Gelenkkopf (3) axial festzulegen,und
wobei ein Verschlussglied (7) eine an die Öffnung (8) angepasste Form und Größe hat, um die Öffnung (8) zu verschließen; und
wobei das Federelement (4) und das Verschlussglied (7) ein in sich nicht demontierbares Einfügeelement (10) bilden, das am unteren Gelenkkopf (3) montiert wird, wodurch das Federelement(4) die Achse (1) gegenüber dem unteren Gelenkkopf (3) in ihrer Position in Richtung ihrer Längserstreckung sichert und wobei damit in Verbindung das Verschlussglied(7)wieder entfernbar in die OÖffnung (8) eingefügt wird;
**dadurch gekennzeichnet,**
**dass** das Einfügeelement (10) einen Handhabevorsprung (9) hat.

2. Axialsicherungs-Verschlussglied-Anordnung nach Auspruch 1;
**dadurch gekennzeichnet,**
**dass** das Federelement(4)aus einem metallischen Draht besteht.

3. Axialsicherungs-Verschlussglied-Anordnung nach Anspruch 2,
**dadurch gekennzeichnet,**
**dass** der Handhabevorsprung (9) von einem zwischen den zwei Federarmen (5) angeordneten Mittelabschnitt(11)des Federelementes(4)gebildet ist.

4. Axialsicherungs-Verschlussglied-Anordnung nach Auspruch 1;
**dadurch gekennzeichnet,**
**dass** das Verschlussglied (7) aus einem elastischen Kunststoff-Material besteht.

5. Axialsicherungs-Verschlussglied-Anordnung nach Auspruch 1;
**dadurch gekennzeichnet,**
**dass** das Einfügeelement(10)aus einem Kunststoff-Material besteht.

6. Axialsicherungs-Verschlussglied-Anordnung nach Auspruch 1;
**dadurch gekennzeichnet,**
**dass** das Federelement(4)aus einem metallischen Flachmaterial besteht.

7. Axialsicherungs-Verschlussglied-Anordnung nach Auspruch 1;
**dadurch gekennzeichnet,**
**dass** die Achse (1) mit dem Grund einer Bohrung(12) im unteren Gelenkkopf (3) einen Anschlag in axialer Richtung der Achse (1) bildet, während der Anschlag in der entgegengesetzten Richtung durch eine Begrenzung der Nut (5) in Verbindung mit dem Federarm(5)des Federelements (4) gebildet wird.

8. Axialsicherungs-Verschlussglied-Anordnung nach Anspruch 6;
**dadurch gekennzeichnet,**
**dass** das Verschlussglied (7) in Hinsicht auf ein Verschieben gegenüber dem Federelement(4) durch mindestens einen Abschnitt gesichert ist, der den Federarm(5) komplett umgreift.

9. Axialsicherungs-Verschlussglied-Anordnung nach einem der Ansprüche 2 und 3,
**dadurch gekennzeichnet,**
**dass** das Verschlussglied (7) gegenüber dem metallischen Draht des Federelementes(4) in Hinsicht auf Verschieben dadurch gesichert ist, dass die Federarme (5)im Bereich des Verschlussgliedes (7) keinen komplett parallelen Verlauf haben oder dass der Draht in seinem Längsverlauf Querschnittsübergänge aufweist.

## Claims

1. Axial securing means/closure member arrangement on an axle (1) of the chain guide (2) in the lower articulation head (3) of a rear bicycle derailleur, the axle (1) being received such that it is rotatable and axially non-displaceable with respect to the lower articulation head (3), a spring element (4) being received in an opening (8) which runs transversely with respect to the axle (1) in the lower articulation head (3) and having two spring arms (5) which engage into a circumferential groove (6) on the axle (1) of the chain guide (2), in order to fix the axle (1) axially with respect to the lower articulation head (3), and a closure member (7) having a shape and size which are adapted to the opening (8), in order to close the opening (8), and the spring element (4) and the closure member (7) forming an insert element (10) which cannot be dismantled per se and is mounted on the lower articulation head (3), as a result of which the spring element (4) secures the axle (1) in its position in the direction of its longitudinal extent with respect to the lower articulation head (3), and, in connection with this, the closure member (7) being inserted into the opening (8) in a manner which can be removed again, **characterized in that** the insert element (10) has a handle projection (9).

2. Axial securing means/closure member arrangement according to Claim 1, **characterized in that** the spring element (4) consists of a metallic wire.

3. Axial securing means/closure member arrangement according to Claim 2, **characterized in that** the handle projection (9) is formed by a centre section (11) of the spring element (4), which centre section (11) is arranged between the two spring arms (5).

4. Axial securing means/closure member arrangement according to Claim 1, **characterized in that** the closure member (7) consists of an elastic plastic material.

5. Axial securing means/closure member arrangement according to Claim 1, **characterized in that** the insert element (10) consists of a plastic material.

6. Axial securing means/closure member arrangement according to Claim 1, **characterized in that** the spring element (4) consists of a metallic flat material.

7. Axial securing means/closure member arrangement according to Claim 1, **characterized in that** the axle (1) forms a stop in the axial direction of the axle (1) with the bottom of a bore (12) in the lower articulation head (3), whereas the stop in the opposite direction is formed by way of a boundary of the groove (5) in conjunction with the spring arm (5) of the spring element (4).

8. Axial securing means/closure member arrangement according to Claim 6, **characterized in that**, with regard to a displacement with respect to the spring element (4), the closure member (7) is secured by way of at least one section which engages completely around the spring arm (5).

9. Axial securing means/closure member arrangement according to either of Claims 2 and 3, **characterized in that** the closure member (7) is secured with regard to displacement with respect to the metallic wire of the spring element (4) by virtue of the fact that the spring arms (5) do not have a completely parallel course in the region of the closure member (7), or that the wire has cross-sectional variations in its longitudinal course.

## Revendications

1. Agencement d'organe de fermeture et de sécurisation axiale au niveau d'un axe (1) du guide-chaîne (2) dans la tête d'articulation inférieure (3) d'un dérailleur arrière de bicyclette, l'axe (1) étant reçu de manière rotative et non déplaçable axialement par rapport à la tête d'articulation inférieure (3), un élément de ressort (4) étant reçu dans une ouverture (8) s'étendant transversalement à l'axe (1) dans la tête d'articulation inférieure (3) et présentant deux bras de ressort (5) qui s'engagent dans une rainure périphérique (6) au niveau de l'axe (1) du guide-chaîne (2) afin de fixer axialement l'axe (1) par rapport à la tête d'articulation inférieure (3) ; et un organe de fermeture (7) présentant une forme et une taille adaptées à l'ouverture (8) afin de fermer l'ouverture (8) ; et
l'élément de ressort (4) et l'organe de fermeture (7) formant un élément d'insertion (10) démontable en soi, qui est monté au niveau de la tête d'articulation inférieure (3), de sorte que l'élément de ressort (4) fixe l'axe (1) par rapport à la tête d'articulation inférieure (3) dans sa position dans la direction de son étendue longitudinale et ainsi, en association, l'organe de fermeture (7) étant inséré de manière à nouveau amovible dans l'ouverture (8) ;
**caractérisé en ce que**
l'élément d'insertion (10) présente une saillie de manipulation (9).

2. Agencement d'organe de fermeture et de sécurisation axiale selon la revendication 1, **caractérisé en ce que** l'élément de ressort (4) se compose d'un fil métallique.

3. Agencement d'organe de fermeture et de sécurisation axiale selon la revendication 2, **caractérisé en ce que** la saillie de manipulation (9) est formée par une portion centrale (11) de l'élément de ressort (4) disposée entre les deux bras de ressort (5).

4. Agencement d'organe de fermeture et de sécurisation axiale selon la revendication 1, **caractérisé en ce que** l'organe de fermeture (7) se compose d'un matériau en plastique élastique.

5. Agencement d'organe de fermeture et de sécurisation axiale selon la revendication 1, **caractérisé en ce que** l'élément d'insertion (10) se compose d'un matériau en plastique.

6. Agencement d'organe de fermeture et de sécurisation axiale selon la revendication 1, **caractérisé en ce que** l'élément de ressort (4) se compose d'un matériau plat métallique.

7. Agencement d'organe de fermeture et de sécurisation axiale selon la revendication 1, **caractérisé en ce que** l'axe (1) forme avec le fond d'un alésage (12), dans la tête d'articulation inférieure (3), une butée dans la direction axiale de l'axe (1), tandis que la butée est formée dans la direction opposée par une limitation de la rainure (5) en association avec le bras de ressort (5) de l'élément de ressort (4).

8. Agencement d'organe de fermeture et de sécurisation axiale selon la revendication 6, **caractérisé en ce que** l'organe de fermeture (7), en rapport avec un déplacement par rapport à l'élément de ressort (4), est sécurisé par au moins une portion qui vient en prise complètement autour du bras de ressort (5).

9. Agencement d'organe de fermeture de sécurisation axiale selon l'une quelconque des revendications 2 et 3, **caractérisé en ce que** l'organe de fermeture (7) est sécurisé par rapport au fil métallique de l'élément de ressort (4) en rapport avec un déplacement de telle sorte que les bras de ressort (5), dans la région de l'organe de fermeture (7), ne présentent pas une allure complètement parallèle ou de telle sorte que le fil présente, dans son allure longitudinale, des changements de section transversale.
